# NEUE EUROPÄISCHE PATENTSCHRIFT

(11) **EP 0 666 198 B2**
(45) Veröffentlichungstag und Bekanntmachung des Hinweises auf die Entscheidung über den Einspruch: **20.12.2000**
(45) Hinweis auf die Patenterteilung: 22.04.1998
(21) Anmeldenummer: 94120189.9
(22) Anmeldetag: 20.12.1994
(51) Int. Cl.: B60R 16/02

(54) **Bordcomputer für Kraftfahrzeuge**
Board computer for vehicles
Ordinateur de bord pour véhicules

(30) Priorität: 07.02.1994 DE 4403712
(43) Veröffentlichungstag der Anmeldung: 09.08.1995
(73) Patentinhaber: Bayerische Motoren Werke Aktiengesellschaft, 80788 München (DE)
(72) Erfinder: Reichart, Günter, D-85551 Kirchheim (DE)

(56) Entgegenhaltungen:
- DE-A- 3 842 414
- DE-A- 4 033 832
- DE-A- 4 129 148
- DE-C- 3 445 668
- FR-A- 2 607 998
- MEASUREMENT + CONTROL, Bd.25, Nr.9, November 1992, LONDON , GB Seiten 264 - 268, XP320446 KNOLL ET AL. 'ADVANCED INTEGRATED DRIVER INFORMATION SYSTEMS'
- Neuffer, K.; Helldörfer, R.; Rauch, H.; Simon, E.: "Structure of a Driver Information System"; Automotive Electronics 83/229; 1983, Heft 229, Seiten 212-217
- Blumenstock, K.-U.: "Auf dem Vormarsch: Bordcomputer - Stille Helfer" mot 15/1989, Heft 15, Seiten 86-91
- Fischer, T.: "Nonstop Nonsens - Technik: Über den Sinn und Unsinn von Bordcomputern"; auto, motor & sport 5/1983, 09.03.1983, Heft 5, Seiten 70-73
- Sodeikat, H.: "EURO-SCOUT'S ADAPTABILITY TO PARADIGM SHIFT IN TRANSPORTATION POLICY", 20 Isata-Proceedings, 93 AT025 1993, 26th ISATA Proc: "Advanced Transport Telematics/Intelligent Vehicle Highway Systems ...", Seiten 59-66

## Beschreibung

Die Erfindung bezieht sich auf einen Bordcomputer nach dem Oberbegriff des Patentanspruchs 1. (vgl. DE 3445668 C1)

Derartige Bordcomputer sind in vielen Fahrzeugen im Einsatz. Die Funktionen reichen von der üblichen Funktion, enthaltend beispielsweise die Bestimmung des Durchschnittsverbrauchs, der Durchschnittsgeschwindigkeit und der voraussichtlichen Reichweite des Kraftfahrzeugs bis zu weitergehenden Funktionen wie Unterstützung bei der Einstellung der Heiz- und Klimaanlage, eines Verkehrsfunkradios, einer Fernsprecheinrichtung usw. Beispiele für die vielfältige Nutzung eines derartigen Bordcomputers finden sich in der DE 38 36 555 A1. Der Bordcomputer ist dabei fest im Fahrzeug eingebaut.

Es sind ferner eine Vielzahl von tragbaren Computern wie Laptops und Notebooks im Handel. Für den Fahrzeugbenutzer bedeutet dies ein Nebeneinander des festinstallierten Bordcomputers und des mobilen Computers.

Es ist ferner aus der FR-A-2 607 998 ein Gerät zum Steuern, Regeln und Anzeigen der eingangs genannten Art bekannt, das herausnehmbar ist und eine Schnittstelle für eine lösbare Verbindung mit dem Bordnetz und einem zentralen Rechner besitzt und bei dem Daten bidirektional vor dem Auftrennen der Verbindung mit dem Bordnetz an dem Bordcomputer ausgetauscht werden.

Ferner zeigt die nicht vorveröffentlichte EP-A-0 613 092, deren Prioritätstag vor dem Prioritätstag der vorliegenden Erfindung liegt und die einen Stand der Technik nach Artikel 54(3) und (4) EPÜ zu bilden scheint, ein tragbares elektronisches Gerät zur Orientierung und Kommunikation, das in einem Gehäuse einen Rechner sowie elektronische Baugruppen enthält. Der Rechner ist aus dem Gehäuse herausnehmbar und unabhängig von dem Gerät zu betreiben. Das Gerät findet Anwendung beispielsweise zur Führung und Einsatzunterstützung von Personengruppen, wie eines Katastrophenschutzverbandes oder eines Truppenverbandes im Gelände und dient dazu, die Orientierung, die Informationsaufnahme und den Informationsaustausch zwischen einer Führungsstelle und den davon geführten Personen des Verbandes sowie zwischen diesen Personen selbst zu beschleunigen und zu verbessern. Der tragbare Rechner ist auch als Zentraleinheit in einem Fahrzeug verwendbar, wozu er lediglich aus dem Gerät herauszunehmen und an eine fahrzeugfeste Andockstation über eine elektrisch-mechanische Schnittstelle anzusetzen ist.

Der Erfindung liegt die Aufgabe zugrunde, einen Bordcomputer der eingangs genannten Art zu schaffen, der sich durch eine Vergrößerung der Einsatz- und Anwendungsmöglichkeiten auszeichnet.

Die Erfindung löst diese Aufgabe durch die Merkmale des Patentanspruchs 1.

Zusätzlich zu der an sich bekannten Doppelverwendbarkeit des Bordcomputers, wie sie für sich bei Rundfunkempfängern bereits bekannt ist, bietet die Erfindung die Möglichkeit, den Nutzen des Bordcomputers deutlich zu steigern. Durch die standortbezogenen Daten kann der Bordcomputer außerhalb des Kraftfahrzeugs besonders sinnreich benutzt werden. Bei diesen Daten handelt es sich beispielsweise um, den jeweiligen Stadtplanausschnitt, Informationen über die nächstgelegene Anschlußstelle an den öffentlichen Personennahverkehr, Adressdaten und sonstige Reiseinformationen. Hierzu gehören beispielsweise Informationen über die im Umkreis liegenden Hotels mit ihren Ausstattungs- und Preisvarianten und dgl. mehr.

Es ist zwar möglich, die jeweiligen Standortinformationen im Bordcomputer, wenn er im Kraftfahrzeug eingebaut ist, stets vorzuhalten und entsprechend dem jeweiligen Standort zu aktualisieren. Demgegenüber ergibt sich eine deutliche Verbesserung, wenn die Daten erst nach dem Abstellen des Antriebsaggregats, vorzugsweise automatisch eingeladen werden. Das Abstellen des Antriebsaggregats kann beispielsweise bei Brennkraftmaschinen durch das Öffnen des Zündstromkreises erkannt werden. Bis zur Entnahme des Bordcomputers verbleibt dann genügend Zeit, um ohne jede Beeinträchtigung für den Fahrzeugbenutzer die Daten aus einem im Kraftfahrzeug verbleibenden Universalspeicher zu entnehmen und in den Bordcomputer einzuladen. Damit ergibt sich eine Entlastung der Speichereinheit gerade während des Betriebs als eigentlicher Bordcomputer.

Besonders vorteilhaft gestaltet sich die Erfindung dann, wenn als eine der Funktionen auch die Navigation des Kraftfahrzeugs unterstützt wird. Damit können die Informationen über den jeweiligen Standort des Kraftfahrzeugs im Bordcomputer selbst gewonnen werden und es kann von diesem selbst die Entnahme der standortbezogenen Daten aus dem Universalspeicher und Übernahme in den Bordcomputer gesteuert werden.

Damit ergibt sich ein universell verwendbarer und an die jeweiligen Bedürfnisse des Nutzers in besonderer Weise angepaßter Bordcomputer.

## Patentansprüche

1. Bordcomputer für Kraftfahrzeuge, mit einer Anzeige-, einer Bedien- und einer Speichereinkeit, durch die verschiedene Funktionen unterstützt werden, wobei eine der Funktionen eine Navigationshilfe ist und wobei der Bordcomputer innerhalb und außerhalb des kraftfahrzeugs verwendbar ist und er eine Schnittstelle besitzt, über die eine lösbare Verbindung mit dem Bordnetz besteht, dadurch gekennzeichnet, daß Mittel zum automatischen Einladen von sich auf den jeweiligen Standort des Kraftfahrzeugs als solchen beziehenden Daten aus einem im Kraftfahrzeug verbleibenden Universalspeicher in die Speichereinheit vor dem Auftrennen der Verbindung vorgesehen sind und daß der für die standortbezogenen Daten maßgebliche Standort durch den Bordcomputer selbst bestimmubar ist.

2. Bordcomputer nach Anspruch 1, dadurch gekennzeichnet, daß die Daten nach dem Abstellen des Antriebsaggregats in die Speichereinheit eingeladen sind.

## Claims

1. An on-board computer for motor vehicles, comprising a display unit, an operating unit and a storage unit for assisting the various functions, wherein one of the functions is a navigation aid and wherein the on-board computer is usable inside and outside the vehicle and has an interface for making a breakable connection to the on-board power system, characterised in that means are provided whereby data relating to the instantaneous position of the vehicle as such are automatically loaded from a universal memory remaining in the vehicle into the storage unit before the connection is broken, and the critical position for the position-related data can be determined by the on-board computer itself.

2. An on-board computer according to claim 1, characterised in that the data are loaded into the storage unit after the drive unit has been switched off.

## Revendications

1. Ordinateur de bord pour véhicules à moteur, avec une unité d'indication, une unité de manoeuvre et une unité de mémoire, grâce auxquelles les différentes fonctions sont assistées, une des fonctions étant une aide à la navigation, l'ordinateur de bord pouvant être utilisé à l'intérieur et à l'extérieur du véhicule et possédant une interface au moyen de laquelle on a une liaison amovible avec le réseau de bord,
caractérisé en ce que
• des moyens sont prévus pour effectuer le chargement automatique dans l'unité de mémoire, à partir d'une mémoire universelle demeurant dans le véhicule de données se rapportant, en tant que telles à l'endroit correspondant où se trouve le véhicule, avant la coupure de la liaison et,
• l'endroit qui est déterminant pour les données s'y référant peut être déterminé par l'ordinateur de bord lui-même.

2. Ordinateur de bord selon la revendication 1,
caractérisé en ce que
les données sont chargées dans l'unité de mémoire après l'arrêt du moteur d'entraînement.
